# EUROPEAN PATENT APPLICATION

(11) **EP 4 503 503 A1**
(43) Date of publication of application: **05.02.2025**
(21) Application number: 22939637.9
(22) Date of filing: 04.07.2022
(51) Int. Cl.: H04L 9/08

(54) **APPLICATION KEY DELETION METHOD, KEY ANCHOR NODE, SERVER, SYSTEM, AND MEDIUM**

(30) Priority: 27.04.2022 CN 202210455638
(71) Applicant: ZTE Corporation, Shenzhen, Guangdong 518057 (CN)
(72) Inventor: YOU, Shilin, Shenzhen, Guangdong 518057 (CN); CAI, Jiyan, Shenzhen, Guangdong 518057 (CN); WANG, Jigang, Shenzhen, Guangdong 518057 (CN); LIN, Zhaoji, Shenzhen, Guangdong 518057 (CN); LIU, Yuze, Shenzhen, Guangdong 518057 (CN); XING, Zhen, Shenzhen, Guangdong 518057 (CN); LIU, Min, Shenzhen, Guangdong 518057 (CN)
(74) Representative: Aipex B.V.
(86) International application number: PCT/CN2022/103550
(87) International publication number: WO 2023/206809

(57) **Abstract**

Provided are an application key deletion method, a key anchor node, a server, a system and a medium. The application key deletion method includes: receiving an AKMA context deletion request, where a user identifier is carried in the AKMA context deletion request; according to the user identifier, searching a corresponding AKMA context and an application server identifier corresponding to the AKMA context; and in response to finding the application server identifier, sending an application key deletion request message and deleting the AKMA context.

## Description

### TECHNICAL FIELD

The present application relates to the technical field of wireless communication networks, for example, an application key deletion method, a key anchor node, a server, a system and a medium.

### BACKGROUND

In the fifth generation mobile communication (5G) network architecture, Authentication and Key Management for Applications (AKMA) provides end-to-end security protection from a user to an application for the 5G network. An application function (AF) may be configured to manage a session of a user equipment (UE). An AKMA anchor function (AAnF) may be configured to generate a session key between the UE and an AF entity and maintain a security context between the AF entity and the UE. After the UE initiates a service establishment request to the AF, the AF may request a corresponding application key from the AAnF according to a key identifier carried in the service establishment request. The application key is generated by the AAnF using an AKMA key and an application server identifier.

A context generated by an AKMA service is required to be deleted when subscription data of the user is updated, for example, when the user exits a network or does not use the AKMA service, a network element in the 5G network cannot provide a service for some reasons (such as arrears), or an operator needs to delete the AKMA context according to a local policy. In the foregoing cases, though the AAnF may delete the AKMA context, the user equipment can still use the application key to conduct related services with the AF since the AF has acquired the corresponding application key, which causes trouble for network service and management and affects the security and service reliability of the network.

### SUMMARY

The present application provides an application key deletion method, a key anchor node, a server, a system and a medium.

An embodiment of the present application provides an application key deletion method. The method is applied to a key anchor node and includes: receiving an Authentication and Key Management for Applications (AKMA) context deletion request, wherein a user identifier is carried in the AKMA context deletion request; searching, according to the user identifier, a corresponding AKMA context and an application server identifier corresponding to the AKMA context; and in response to finding the application server identifier, sending an application key deletion request message and deleting the AKMA context.

An embodiment of the present application further provides an application key deletion method. The method is applied to an application server and includes: receiving an application key deletion request message, wherein the application key deletion request message carries a key identifier; and deleting an application key corresponding to the key identifier according to the application key deletion request message.

An embodiment of the present application further provides a key anchor node. The key anchor node includes a memory, a processor and a computer program stored in the memory and executable by the processor. The computer program, when executed by the processor, causes the processor to perform the preceding application key deletion method which is applied to the key anchor node.

An embodiment of the present application further provides an application server. The application server includes a memory, a processor and a computer program stored in the memory and executable by the processor. The computer program, when executed by the processor, causes the processor to perform the preceding application key deletion method which is applied to the application server.

An embodiment of the present application further provides an application key deletion system. The system includes the preceding key anchor node and the preceding application server.

An embodiment of the present application further provides a computer-readable storage medium storing a computer program which, when executed by a processor, causes the processor to perform the preceding application key deletion method.

### BRIEF DESCRIPTION OF DRAWINGS

FIG. 1 is a flowchart of an application key deletion method according to an embodiment.
FIG. 2 is a schematic diagram of deleting an application key according to an embodiment.
FIG. 3 is a schematic diagram of requesting a target application server located within an operator network to delete an application key according to an embodiment.
FIG. 4 is a schematic diagram of requesting a target application server located outside an operator network to delete an application key according to an embodiment.
FIG. 5 is a schematic diagram of an application server located within an operator network acquiring an application key according to an embodiment.
FIG. 6 is a schematic diagram of an application server located outside an operator network acquiring an application key according to an embodiment.
FIG. 7 is another flowchart of an application key deletion method according to an embodiment.
FIG. 8 is a schematic diagram illustrating a structure of an application key deletion apparatus according to an embodiment.
FIG. 9 is another schematic diagram illustrating a structure of an application key deletion apparatus according to an embodiment.
FIG. 10 is a schematic diagram illustrating a hardware structure of a key anchor node according to an embodiment.
FIG. 11 is a schematic diagram illustrating a hardware structure of an application server according to an embodiment.
FIG. 12 is a schematic diagram illustrating a structure of an application key deletion system according to an embodiment.

### DETAILED DESCRIPTION

The present application is described hereinafter in conjunction with the drawings and embodiments. The embodiments described herein are intended to explain the present application. For ease of description, the drawings illustrate part related to the present application.

In an AKMA key derivation process, when a UE accesses a 5G network and is successfully authenticated by a SG-Authentication and Key Agreement (AKA, i.e., 5G-AKA) or by an Extensible Authentication Protocol-AKA' (EAP-AKA'), an Authentication Server Function (AUSF) and the UE generate a key (K_{AUSF}), and an AKMA anchor key (K_{AKMA}) is derived from the K_{AUSF} at the same time. The UE and an AAnF derive an application key (K_{AF}) from the K_{AKMA} and a key identifier (K_{ID}) related to the AKMA anchor key K_{AKMA} is also generated at the same time. The authentication process includes the following.
a. The UE initiates a service establishment request (that is, an application session establishment request) to the application server (AF). The request carries a key identifier (A-KID) generated by the UE.
b. If the AF does not find a context related to the A-KID, the AF sends an application key acquisition request (Naanf_AKMA_ApplicationKey_Get Request) to the AAnF. The key acquisition request carries the A-KID received by the AF.
c. After the AAnF receives the application key acquisition request sent by the AF (or by the AF through a Network Exposure Function (NEF)), the AAnF generates the K_{AF} based on the K_{AKMA}, and the K_{AF} = KDF (AF ID, K_{AKMA}), where the KDF denotes a key generation function.
d. The AAnF sends an application key acquisition response message (Naanf_AKMA_ApplicationKey_Get Response) to the AF. The response message includes the generated K_{AF} and a corresponding expiry time (expTime).
e. The AF sends an application session establishment response message to the UE.

When the subscription data of the user is updated, the context generated for the AKMA service is required to be deleted. Although the AAnF may delete the AKMA context (such as the K_{AKMA}, the A-KID, and a user identifier, etc.), the UE can still use the K_{AF} to conduct the related service with the AF since the AF has acquired the corresponding K_{AF}, which causes trouble for the network service and management and affects the security and service reliability of the network.

An embodiment of the present application provides an application key deletion method, and the method is applied to a key anchor node. The key anchor node may also be interpreted as an AAnF node, an AAnF network element, or an AAnF server. The key anchor node may indicate that a related AF deletes a corresponding K_{AF} when the context generated for the AKMA service is required to be deleted so that the UE can be prevented from continuing using the K_{AF} to conduct the related service with the AF, improving the security and reliability of the network service and management.

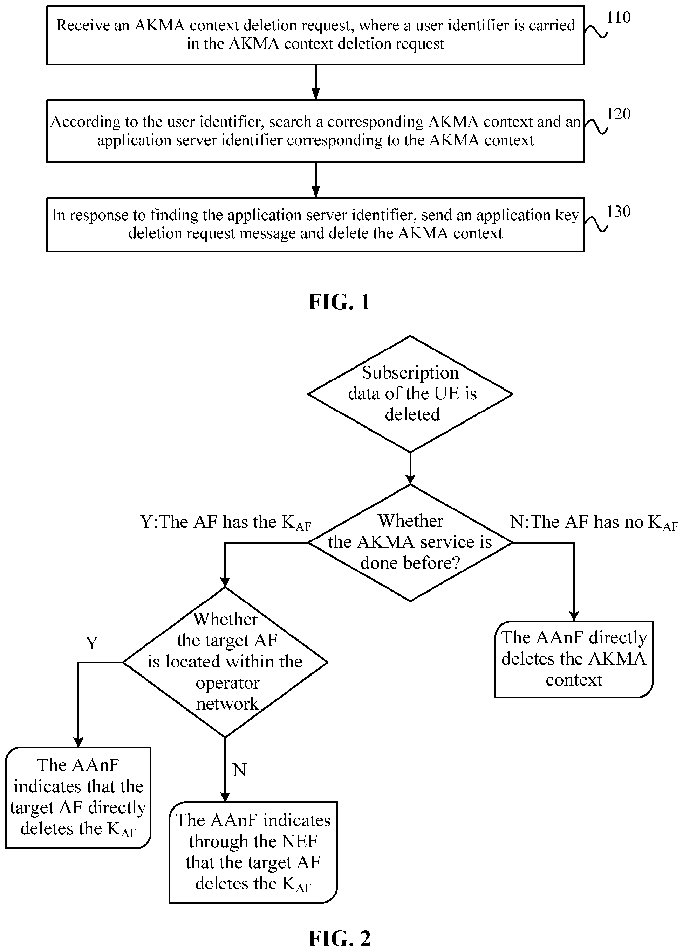

FIG. 1 is a flowchart of an application key deletion method according to an embodiment. The method may be applied to a key anchor node. As shown in FIG. 1, the method provided in the embodiment includes 110, 120 and 130.

In 110, an AKMA context deletion request is received, and a user identifier is carried in the AKMA context deletion request.

In 120, according to the user identifier, a corresponding AKMA context and an application server identifier corresponding to the AKMA context are searched.

In 130, in response to finding the application server identifier, an application key deletion request message is sent, and the AKMA context is deleted.

In the embodiment, when the AAnF receives the AKMA context deletion request, the AAnF can search the AKMA context corresponding to the user identifier and the corresponding application server identifier (AF_ID) according to the user identifier in the AKMA context deletion request. If the AF_ID is found, the application key deletion request message is sent to an AF corresponding to the AF_ID, and the key identifier (A-KID) is carried in the application key deletion request message to indicate that the AF deletes the application key (K_{AF}) obtained by the AF.

The user identifier may be a subscription permanent identifier (SUPI).

In a process of establishing an application session of the UE, when the AF acquires the application key from the AAnF, the AAnF saves the AF_ID of the AF in order to send the application key deletion request message to the corresponding AF when the AKMA context deletion request is required.

In an embodiment, the method further includes that the AKMA context is deleted in response to not finding the application server identifier.

In the embodiment, if a corresponding AF_ID is not found according to the user identifier, the AKMA context is deleted directly without indicating that the corresponding AF deletes the application key.

In an embodiment, that the application key deletion request message is sent includes the following.

A target application server is determined according to the application server identifier. The application key deletion request message is sent to the target application server, the application key deletion request message carries a key identifier, and the key identifier is used for indicating that the target application server deletes a corresponding application key.

FIG. 2 is a schematic diagram of deleting an application key according to an embodiment. As shown in FIG. 2, when the operator cancels the user's subscription, cancels the user's AKMA subscription according to the user's will, or deletes the AKMA context according to a local policy, an operator's unified data management (UDM) network element or an operation administration and maintenance (OAM) network element selects an AAnF corresponding to the user according to the user identifier SUPI or a routing indicator (RID). The AAnF deletes subscription data of the UE, and finds a corresponding AKMA context according to the user identifier. If the AKMA context only has the A-KID, the K_{AKMA} and the SUPI, it indicates that the AAnF has not conducted the AKMA service, and the AAnF only deletes the corresponding AKMA context. If the AKMA context includes not only the A-KID, the K_{AKMA} and the SUPI but also at least one corresponding AF _ID, the AAnF determines a corresponding target AF according to the AF_ID and sends the application key deletion request message to the target AF. The application key deletion request message carries the A-KID to indicate that the target AF deletes a K_{AF} corresponding to the A-KID. Meanwhile, the AAnF deletes the AKMA context (the A-KID, the K_{AKMA} and the SUPI) and may also delete the corresponding AF_ID. If the target AF is located within an operator network, the AAnF directly indicates that the target AF deletes the corresponding K_{AF}. If the target AF is located outside the operator network, the AAnF requests the target AF to delete the corresponding K_{AF} through the NEF.

In an embodiment, the key identifier is further used for indicating that the target application server deletes an expiry time of the corresponding application key.

In the embodiment, the A-KID carried in the application key deletion request message may also be used for indicating that the target AF deletes the validity period of the corresponding K_{AF}.

In an embodiment, that the application key deletion request message is sent to the target application server includes the following.

The application key deletion request message is sent to the target application server in response to the target application server being located within the operator network. The application key deletion request message is sent to the target application server through the Network Exposure Function (NEF) in response to the target application server being located outside the operator network.

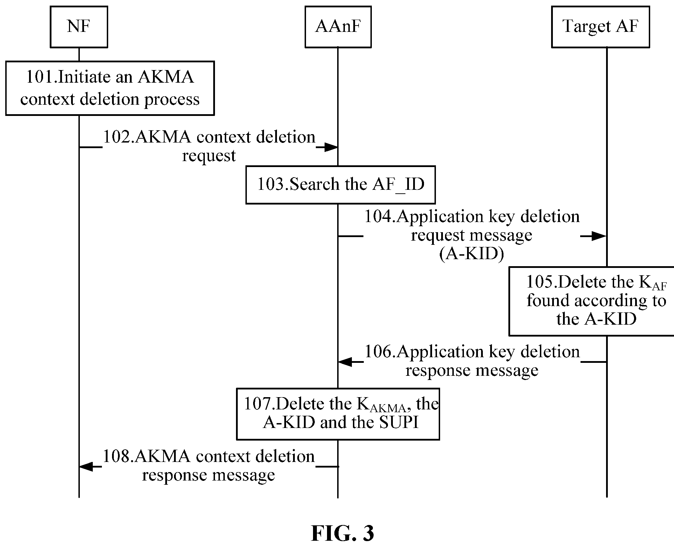

FIG. 3 is a schematic diagram of requesting a target application server located within an operator network to delete an application key according to an embodiment. In the embodiment, when the target AF is located within the operator network and the AAnF receives the AKMA context deletion request, the AAnF searches the corresponding AKMA context according to the SUPI in the AKMA context deletion request and searches the AF_ID corresponding to the AKMA context simultaneously. If the AF_ID does not exist, the AKMA context is directly deleted. If the AF_ID exists, the corresponding target AF is found according to the AF_ID, and the application key deletion request message is sent to the target AF to request the target AF to delete the corresponding K_{AF} according to the A-KID. As shown in FIG. 3, a process of deleting the K_{AF} includes the following.

In 101, a network function (NF) (a UDM or an OAM) initiates an AKMA context deletion process to the AAnF according to the local policy (such as arrears) or when the subscription data of the user (or only AKMA subscription data) is deleted, to delete the AKMA context in the AAnF.

In 102, the NF discovers and selects the user's AAnF through a network repository function (NRF) according to the local configuration or through an RID parameter in the A-KID to send the AKMA context deletion (Naanf_AKMA_Context_Remove) request to the AAnF to request the AKMA context of the user to be deleted. The user identifier SUPI is carried in the AKMA context deletion request.

In 103, the AAnF searches the corresponding AKMA context according to the SUPI carried in the AKMA context deletion request and searches the AF_ID corresponding to the AKMA context simultaneously; if the AAnF does not find the corresponding AF_ID, 107 is executed; and if at least one AF_ID is found, 104 is executed.

In 104, the AAnF sends the application key deletion (Application Key Remove) request message to the target AF according to the found AF_ID, where the A-KID is carried in the application key remove request message. The message may also be a notification message that notifies the target AF of removing the application key, and if the message is the notification message, 107 is directly executed.

In 105, the target AF searches the corresponding K_{AF} according to the A-KID; if the K_{AF} is found, the K_{AF} is deleted, and the expiry time corresponding to the K_{AF} may also be deleted; and if the K_{AF} is not found, a corresponding failure reason value is fed back in 106, where the failure reason value may be that the corresponding application key is not discovered.

In 106, the target AF feeds back an application key deletion response message to the AAnF, and the application key deletion response message carries a response to a successful application key deletion or a failure reason value.

In 107, if the corresponding AF_ID is not found, the AAnF deletes the AKMA context including the SUPI, the A-KID and the K_{AKMA}; and if the corresponding AF_ID is found, the AAnF deletes the AKMA context and may also delete the found AF_ID at the same time.

In 108, the AAnF feeds back an AKMA context deletion response message to the NF.

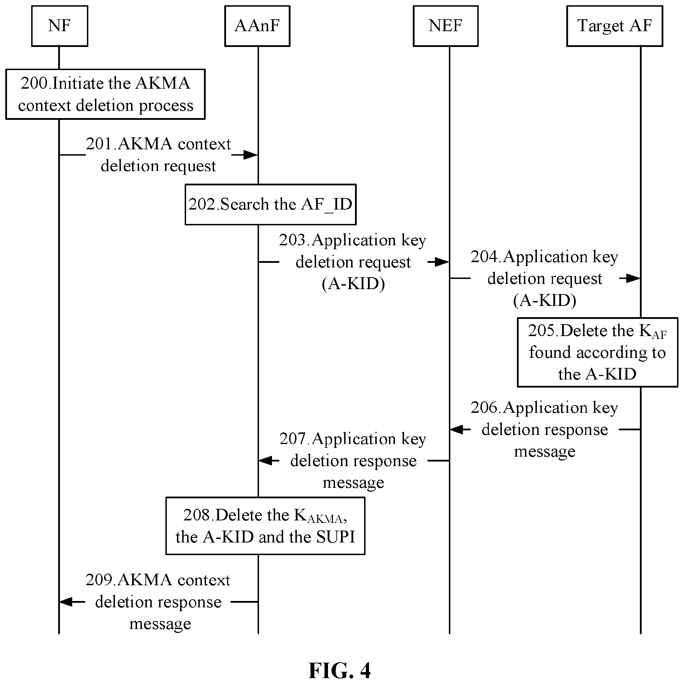

FIG. 4 is a schematic diagram of requesting a target application server located outside an operator network to delete an application key according to an embodiment. In the embodiment, when the target AF is located outside the operator network, and the AAnF receives the AKMA context deletion request, the AAnF searches the corresponding AKMA context according to the SUPI in the AKMA context deletion request and searches the AF_ID corresponding to the AKMA context simultaneously. If the AF_ID does not exist, the AKMA context is directly deleted. If the AF_ID exists, the corresponding target AF is found according to the AF_ID, and the application key deletion request message is sent to the target AF through the NEF to request the target AF to delete the corresponding K_{AF} according to the A-KID. As shown in FIG. 4, a process of deleting the K_{AF} includes the following.

In 200, the network function (NF) (the UDM or the OAM) initiates the AKMA context deletion process to the AAnF according to the local policy (such as arrears) or when the subscription data of the user (or only the AKMA subscription data) is deleted, to delete the AKMA context in the AAnF.

In 201, the NF discovers and selects the user's AAnF through the NRF according to the local configuration or through the RID parameter in the A-KID to send the AKMA context deletion request to the AAnF to request the AKMA context of the user to be deleted, and the user identifier SUPI is carried in the AKMA context deletion request.

In 202, the AAnF searches the corresponding AKMA context according to the SUPI carried in the AKMA context deletion request and searches the AF_ID corresponding to the AKMA context simultaneously; if the AAnF does not find the corresponding AF _ID, 208 is executed; and if the at least one AF_ID is found, 203 is executed.

In 203, the AAnF searches the target AF according to the found AF_ID, and if the target AF is found to be located outside the operator network, the AAnF sends the application key deletion request message (Nnef_AKMA_AFKey_Remove) to the NEF, where the A-KID is carried in the application key deletion request message. The message may also be a notification message that notifies the NEF of the forwarding of the application key deletion request message to the target AF, and if the message is the notification message, 208 is directly executed.

In 204, the NEF sends the application key deletion request message to the AF, and the message carries the A-KID. The message may also be a notification message that notifies the target AF of the deletion of the application key.

In 205, the target AF searches the corresponding K_{AF} according to the A-KID; if the K_{AF} is found, the K_{AF} is deleted, and the expiry time corresponding to the K_{AF} may also be deleted; and if the K_{AF} is not found, the corresponding failure reason value is fed back in 206, where the failure reason value may be that the corresponding application key is not discovered.

In 206, the target AF feeds back the application key deletion response message to the NEF, and the application key deletion response message carries the response to the successful application key deletion or the failure reason value.

In 207, the NEF feeds back the application key deletion response message to the AAnF, where the application key deletion response message carries the response to the successful application key deletion or the failure reason value.

In 208, if the corresponding AF_ID is not found in 202, the AAnF deletes the AKMA context including the SUPI, the A-KID and the K_{AKMA}; and if the corresponding AF_ID is found, the AAnF deletes the AKMA context and the found AF_ID simultaneously.

In 209, the AAnF feeds back the AKMA context deletion response message to the NF.

If target AFs found by the AAnF include not only the target AF within the operator network but also the target AF outside the operator network, processes in FIGS. 3 and 4 are executed correspondingly, that is, the application key deletion request message is sent to the target AF within the operator network and is also sent to the target AF outside the operator network through the NEF to indicate that the target AFs delete corresponding application keys respectively.

In an embodiment, before the AKMA context deletion request is received, the method further includes the following.

An application key acquisition message of an application server that initiates a service establishment request is received, where the application key acquisition message carries a key identifier and an application server identifier of the application server. The application server identifier is stored.

In the embodiment, in the process of establishing an application session of the UE, the AAnF saves the AF_ID of the AF when the AF acquires the application key from the AAnF, so as to send the application key deletion request message to the corresponding AF when the AKMA context deletion request is required.

In an embodiment, that the application key acquisition message of the application server that initiates the service establishment request is received includes the following.

An application key acquisition request of the application server is received in response to the application server being located within the operator network. The application key acquisition request of the application server is received through the NEF in response to the application server being located outside the operator network.

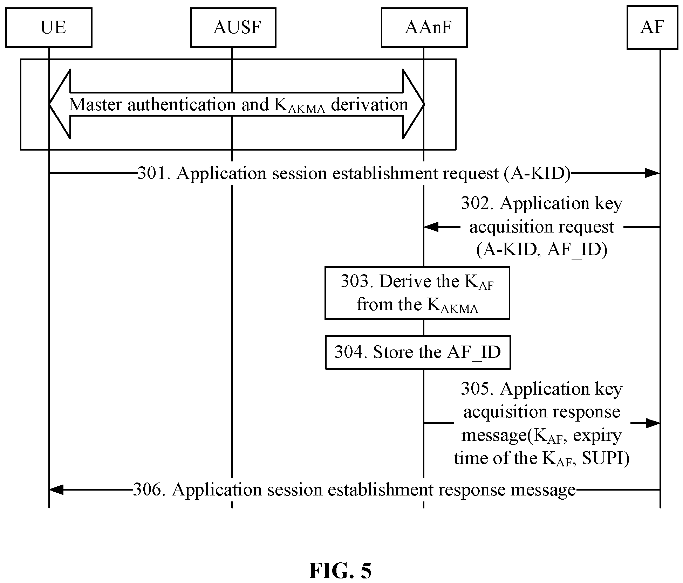

FIG. 5 is a schematic diagram of an application server located within an operator network acquiring an application key according to an embodiment. In the embodiment, an AF is located within the operator network. When the AF acquires an application key from an AAnF after a UE and the AF initiate a service establishment request, the AAnF is required to save an AF_ID corresponding to the AF. As shown in FIG. 5, a process of acquiring the application key includes the following.

In 301, before interacting with the AF of the AKMA, the UE should derive a K_{AKMA} and an A-KID from a K_{AUSF}. When the UE initiates communication with the AF, the A-KID should be carried in the service establishment request (that is, an application session establishment request), and the UE may derive a K_{AF} before or after sending the service establishment request.

In 302, if the AF does not have an available K_{AF} related to the A-KID, the AF discovers and selects the AAnF through an NRF according to a local configuration or through an RID parameter in the A-KID, and sends an application key acquisition request to the AAnF to request to obtain a K_{AF} of the UE. The application key acquisition request carries the A-KID and the AF_ID. The AAnF should use the AF_ID to check whether the AAnF may provide a service for the AF according to a configured local policy or an authorization information or policy provided by the NRF. If the AAnF may provide the service for the AF, the following operations are executed: The AAnF may determine whether the user is authorized to use the AMKA by verifying whether the corresponding K_{AKMA} can be found through the A-KID; if the AAnF has a valid K_{AKMA}, the AAnF should continue to execute 303; and if the AAnF does not have a valid K_{AKMA}, the AAnF should continue to execute 305 and send an error response.

In 303, if the AAnF does not have the K_{AF}, the AAnF derives the K_{AF} from the K_{AKMA}, and the K_{AF} = KDF (AF _ID, K_{AKMA}).

In 304, the AAnF stores the AF_ID, and stores the A-KID, the K_{AKMA} and the SUPI corresponding to the AKMA context.

In 305, the AAnF sends an application key acquisition response message to the AF. The application key acquisition response message carries the SUPI, the K_{AF} and the expiry time corresponding to the K_{AF}, or may carry AKMA key request failure information.

In 306, the AF sends an application session establishment response message to the UE.

If the information in 305 indicates the AKMA key request failure, the AF should refuse the service establishment request, and an error reason is carried in the application session establishment response message. Afterward, the UE may initiate a new service establishment request to the AF, and the latest A-KID is carried.

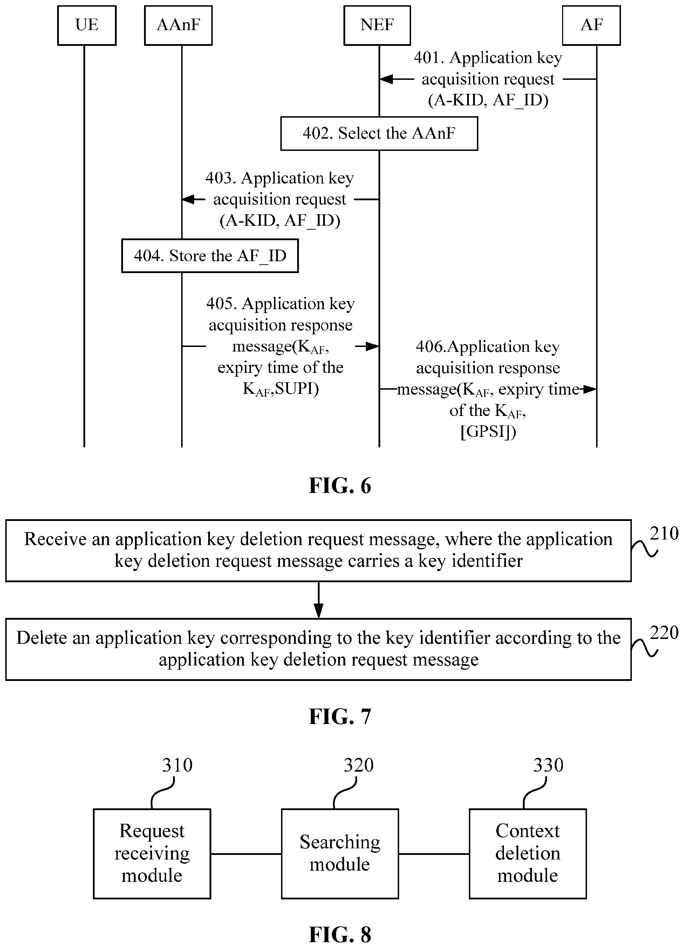

FIG. 6 is a schematic diagram of an application server located outside an operator network acquiring an application key according to an embodiment. In the embodiment, an AF is located outside the operator network. After the UE and the AF initiate a service establishment request, the AF acquires an application key from an AAnF through an NEF, and the AAnF is required to save an AF_ID corresponding to the AF. As shown in FIG. 6, the process of acquiring the application key includes the following.

In 401, when the AF requests the application key from the AAnF, for example, when the UE initiates an application session establishment request, the AF discovers, through an A-KID, a home public land mobile network (HPLMA) to which the current UE belongs and sends an application key acquisition request (Nnef_AKMA_AF Key Request) to the AAnF through an NEF service. The request should carry the A-KID and the AF_ID.

In 402, if the AF requests a K_{AF} after authorization by the NEF, the NEF discovers and selects the AAnF through the NRF according to a local configuration or through an RID parameter in the A-KID.

In 403, the NEF sends an application key acquisition request to the AAnF to request to obtain the K_{AF} of the UE. The application key acquisition request carries the A-KID and the AF_ID. The AAnF should use the AF_ID to check whether the AAnF may provide the service for the AF according to a configured local policy or an authorization information or policy provided by the NRF. If the AAnF may provide the service for the AF, the following operations are executed: The AAnF may determine whether the user is authorized to use the AMKA by verifying whether the corresponding K_{AKMA} can be found through the A-KID; if the AAnF has a valid K_{AKMA}, the AAnF should continue to execute 404; and if the AAnF does not have a valid K_{AKMA}, the AAnF should continue to execute 405 and send an error response.

In 404, the AAnF stores the AF_ID, and stores the A-KID, the K_{AKMA} and the SUPI corresponding to the AKMA context.

In 405, the AAnF derives an AKMAK_{AF} from the K_{AKMA}. K_{AF} = KDF (AF _ID, K_{AKMA}), where the KDF denotes a key derivation function. The AAnF then feeds back an application key acquisition response message, which carries the K_{AF}, the expiry time of the K_{AF} and the SUPI, to the NEF.

In 406, the NEF sends an application key acquisition response message (Nnef_AKMA _AFKey Response) to the AF, and the message carries a generic public subscription identifier (GPSI), the K_{AF} and the expiry time corresponding to the K_{AF}. The GPSI is an external identification GPSI which is converted from the SUPI by the NEF through the local policy and using a user data subscription management (Nudm_SubscriberDataManagement) service provided by the UDM.

In an embodiment, the application server identifier includes a fully qualified domain name (FQDN) of the application server, or the application server identifier includes a protocol identifier and an FQDN of the application server, where the protocol identifier is used for identifying a security protocol between the application server and the user equipment.

In the embodiment, the application server identifier at least includes the FQDN of the AF and may also include a protocol identifier Ua*. The protocol identifier Ua* is used for identifying the security protocol between the AF and the UE.

An embodiment of the present application further provides an application key deletion method. The method is applied to an application server. The application server may also be construed as an AF node, an AF network element, or an AF server. The application server may delete the corresponding K_{AF} according to the key identifier carried in the application key request message so that the UE can be prevented from continuing using the K_{AF} to conduct the related service with the AF, improving the security and reliability of the network service and management.

FIG. 7 is another flowchart of an application key deletion method according to an embodiment. As shown in FIG. 7, the method provided in the embodiment includes 210 and 220.

In 210, an application key deletion request message is received, where the application key deletion request message carries a key identifier.

In 220, an application key corresponding to the key identifier is deleted according to the application key deletion request message.

In an embodiment, the method further includes that the expiry time of the application key corresponding to the key identifier is deleted.

In an embodiment, the application key deletion request message is sent by a key anchor node in response to finding an application server identifier corresponding to an AKMA context, where the AKMA context corresponds to a user identifier in an AKMA context deletion request.

In an embodiment, that the application key deletion request message is received includes the following.

The application key deletion request message is received in response to the application server being located within an operator network. The application key deletion request message is received through an NEF in response to the application server being located outside the operator network.

In an embodiment, before the application key deletion request message is received, the method further includes the following.

An application key acquisition message is sent to a key anchor node, where the application key acquisition message carries a key identifier and an application server identifier of the application server.

In an embodiment, that the application key acquisition message is sent to the key anchor node includes the following.

The application key acquisition message is sent to the key anchor node in response to the application server being located within the operator network. The application key acquisition message is sent to the key anchor node through the NEF in response to the application server being located outside the operator network.

In an embodiment, the application server identifier includes an FQDN of the application server, or the application server identifier includes a protocol identifier and an FQDN of the application server. The protocol identifier is used for identifying a security protocol between the application server and a user equipment.

An embodiment of the present application further provides an application key deletion apparatus. FIG. 8 is a schematic diagram illustrating a structure of an application key deletion apparatus according to an embodiment. As shown in FIG. 8, the application key deletion apparatus includes a request receiving module 310, a searching module 320 and a context deletion module 330.

The request receiving module 310 is configured to receive an AKMA context deletion request, where a user identifier is carried in the AKMA context deletion request. The searching module 320 is configured to search, according to the user identifier, a corresponding AKMA context and an application server identifier corresponding to the AKMA context. The context deletion module 330 is configured to, in response to finding the application server identifier, send an application key deletion request message and delete the AKMA context.

The application key deletion apparatus in the embodiment indicates that the related AF deletes the corresponding K_{AF} when the context generated for the AKMA service is required to be deleted so that the UE can be prevented from continuing using the K_{AF} to conduct the related service with the AF, improving the security and reliability of the network service and management.

In an embodiment, the context deletion module 330 is further configured to delete the AKMA context in response to not finding the application server identifier.

In an embodiment, the context deletion module 330 includes a determination unit and a deletion request unit.

The determination unit is configured to determine a target application server according to the application server identifier. The deletion request unit is configured to send the application key deletion request message to the target application server. The application key deletion request message carries a key identifier, and the key identifier is used for indicating that the target application server deletes a corresponding application key.

In an embodiment, the key identifier is further used for indicating that the target application server deletes the expiry time of the corresponding application key.

In an embodiment, the deletion request unit is configured to send the application key deletion request message to the target application server in response to the target application server being located within an operator network; and send the application key deletion request message to the target application server through an NEF in response to the target application server being located outside the operator network.

In an embodiment, the apparatus further includes a receiving module and a storage module.

The receiving module is configured to, before the AKMA context deletion request is received, receive an application key acquisition message of an application server that initiates a service establishment request, where the application key acquisition message carries a key identifier and an application server identifier of the application server. The storage module is configured to store the application server identifier.

In an embodiment, the receiving module is configured to receive an application key acquisition request of the application server in response to the application server being located within the operator network; and receive the application key acquisition request of the application server through the NEF in response to the application server being located outside the operator network. In an embodiment, the application server identifier includes an FQDN of the application server, or the application server identifier includes a protocol identifier and an FQDN of the application server, where the protocol identifier is used for identifying a security protocol between the application server and a user equipment.

The application key deletion apparatus provided in the embodiment and the application key deletion method provided in the preceding embodiments belong to the same concept. For technical details not described in detail in the embodiment, reference may be made to any one of the preceding embodiments, and the embodiment has the same effects as the executed application key deletion method.

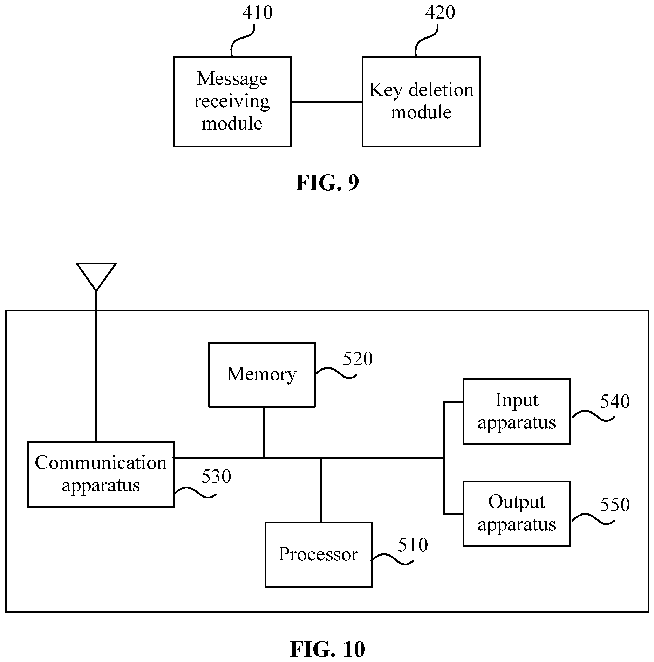

An embodiment of the present application further provides an application key deletion apparatus. FIG. 9 is another schematic diagram illustrating a structure of an application key deletion apparatus according to an embodiment. As shown in FIG. 9, the application key deletion apparatus includes a message receiving module 410 and a key deletion module 420.

The message receiving module 410 is configured to receive an application key deletion request message, where the application key deletion request message carries a key identifier. The key deletion module 420 is configured to delete an application key corresponding to the key identifier according to the application key deletion request message.

The application key deletion apparatus in the embodiment may delete the corresponding application key according to the key identifier carried in the application key request message so that the UE can be prevented from continuing using the application key to conduct the related service with the AF, improving the security and reliability of the network service and management.

In an embodiment, the key deletion module 420 is further configured to delete the expiry time of the application key corresponding to the key identifier.

In an embodiment, the application key deletion request message is sent by a key anchor node in response to finding an application server identifier corresponding to an AKMA context, where the AKMA context corresponds to a user identifier in an AKMA context deletion request.

In an embodiment, the message receiving module 410 is configured to receive the application key deletion request message in response to an application server being located within an operator network; and receive the application key deletion request message through an NEF in response to the application server being located outside the operator network.

In an embodiment, the apparatus further includes a sending module.

The sending module is configured to send an application key acquisition message to the key anchor node before the application key deletion request message is received, where the application key acquisition message carries the key identifier and an application server identifier of the application server.

In an embodiment, the sending module is configured to send the application key acquisition message to the key anchor node in response to the application server being located within the operator network; and send the application key acquisition message to the key anchor node through the NEF in response to the application server being located outside the operator network.

In an embodiment, the application server identifier includes an FQDN of the application server, or the application server identifier includes a protocol identifier and an FQDN of the application server, where the protocol identifier is used for identifying a security protocol between the application server and a user equipment.

The application key deletion apparatus provided in the embodiment and the application key deletion method provided in the preceding embodiments belong to the same concept. For technical details not described in detail in the embodiment, reference may be made to any one of the preceding embodiments, and the embodiment has the same effects as the executed application key deletion method.

An embodiment of the present application further provides a key anchor node. FIG. 10 is a schematic diagram illustrating a hardware structure of a key anchor node according to an embodiment. As shown in FIG. 10, the key anchor node provided in the present application includes a processor 510 and a memory 520. One or more processors 510 may be provided in the key anchor node. In FIG. 10, one processor 510 is used as an example. The memory 520 is configured to store one or more programs. The one or more programs are executed by the one or more processors 510 to cause the one or more processors 510 to perform the application key deletion method provided in embodiments of the present application.

The key anchor node further includes a communication apparatus 530, an input apparatus 540 and an output apparatus 550.

The processor 510, the memory 520, the communication apparatus 530, the input apparatus 540 and the output apparatus 550 in the key anchor node may be connected through a bus or in other manners. The connection through the bus is used as an example in FIG. 10.

The input apparatus 540 may be configured to receive input digital or character information and generate key signal input related to user settings of the key anchor node and function control of the key anchor node. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs and modules, such as program instructions/modules (such as the request receiving module 310, the searching module 320 and the context deletion module 330) corresponding to the application key deletion method provided in the embodiments of the present application. The memory 520 may include a program storage region and a data storage region. The program storage region may store an operating system and an application program required by at least one function. The data storage region may store data created according to the use of the key anchor node. Additionally, the memory 520 may include a high-speed random-access memory and may also include a nonvolatile memory such as at least one magnetic disk memory, a flash memory, or another nonvolatile solid-state memory. In some examples, the memory 520 may include memories which are remotely disposed with respect to the processor 510, and these remote memories may be connected to the key anchor node via a network. Examples of the preceding network include, but are not limited to, the Internet, an intranet, a local area network, a mobile communication network and a combination thereof.

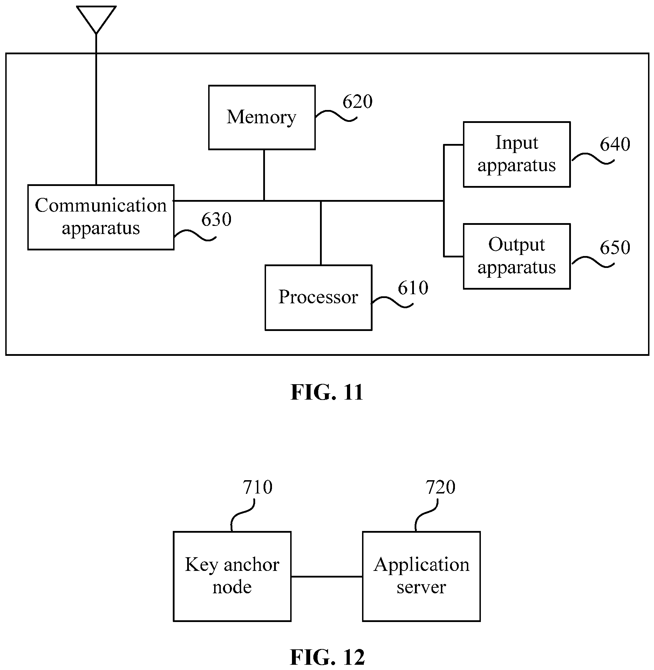

An embodiment of the present application further provides an application server. FIG. 11 is a schematic diagram illustrating a hardware structure of an application server according to an embodiment. As shown in FIG. 11, the application server provided in the present application includes a processor 610 and a memory 620. One or more processors 610 may be provided in the application server. In FIG. 11, one processor 610 is used as an example. The memory 620 is configured to store one or more programs. The one or more programs are executed by the one or more processors 610 to cause the one or more processors 610 to perform the application key deletion method provided in embodiments of the present application.

The application server further includes a communication apparatus 630, an input apparatus 640 and an output apparatus 650.

The processor 610, the memory 620, the communication apparatus 630, the input apparatus 640 and the output apparatus 650 in the application server may be connected through a bus or in other manners. The connection through the bus is used as an example in FIG. 11.

The input apparatus 640 may be configured to receive input digital or character information and generate key signal input related to user settings of the application server and function control of the application server. The output apparatus 650 may include a display device such as a display screen.

The communication apparatus 630 may include a receiver and a sender. The communication apparatus 630 is configured to perform information transceiving communication under the control of the processor 610.

As a computer-readable storage medium, the memory 620 may be configured to store software programs, computer-executable programs and modules, such as program instructions/modules (such as the message receiving module 410 and the key deletion module 420) corresponding to the application key deletion method provided in the embodiments of the present application. The memory 620 may include a program storage region and a data storage region. The program storage region may store an operating system and an application program required by at least one function. The data storage region may store data created according to the use of the application server. Additionally, the memory 620 may include a high-speed random-access memory and may also include a nonvolatile memory such as at least one magnetic disk memory, a flash memory, or another nonvolatile solid-state memory. In some examples, the memory 620 may include memories which are remotely disposed with respect to the processor 610, and these remote memories may be connected to the application server via a network. Examples of the preceding network include, but are not limited to, the Internet, an intranet, a local area network, a mobile communication network and a combination thereof.

An embodiment of the present application further provides an application key deletion system. FIG. 12 is a schematic diagram illustrating a structure of an application key deletion system according to an embodiment. As shown in FIG. 12, the system includes the key anchor node 710 provided in any one of the preceding embodiments and the application server 720 provided in any one of the preceding embodiments.

Optionally, the system further includes an NEF node.

The application key deletion system provided in the embodiment and the application key deletion method provided in the preceding embodiments belong to the same concept. For technical details not described in detail in the embodiment, reference may be made to any one of the preceding embodiments, and the embodiment has the same effects as the executed application key deletion method.

An embodiment of the present application further provides a storage medium. The storage medium stores a computer program which, when executed by a processor, causes the processor to perform the application key deletion method according to any one of the embodiments of the present application. The method includes: receiving an AKMA context deletion request, where a user identifier is carried in the AKMA context deletion request; according to the user identifier, searching a corresponding AKMA context and an application server identifier corresponding to the AKMA context; and in response to finding the application server identifier, sending an application key deletion request message and deleting the AKMA context.

Alternatively, the method includes: receiving an application key deletion request message, where the application key deletion request message carries a key identifier; and deleting an application key corresponding to the key identifier according to the application key deletion request message.

A computer storage medium in an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device, or any combination thereof. Examples (a non-exhaustive list) of the computer-readable storage medium include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk and C++ and may further include conventional procedural programming languages such as "C" and similar programming languages. The program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any type of network including a local area network (LAN) or a wide area network (WAN) or may be connected to an external computer (for example, via the Internet through an Internet service provider).

The preceding illustrates example embodiments of the present application.

It is to be understood by those skilled in the art that the term "user equipment" encompasses any suitable type of radio user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules and functions, or may represent a combination of program steps and logic circuits, modules and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

## Claims

1. An application key deletion method, applied to a key anchor node and comprising:
receiving an Authentication and Key Management for Applications (AKMA) context deletion request, wherein a user identifier is carried in the AKMA context deletion request;
searching, according to the user identifier, a corresponding AKMA context and an application server identifier corresponding to the AKMA context; and
in response to finding the application server identifier, sending an application key deletion request message and deleting the AKMA context.

2. The method of claim 1, further comprising:
deleting the AKMA context in response to not finding the application server identifier.

3. The method of claim 1, wherein sending the application key deletion request message comprises:
determining a target application server according to the application server identifier; and
sending the application key deletion request message to the target application server, wherein the application key deletion request message carries a key identifier, and the key identifier is used for indicating that the target application server deletes an application key corresponding to the key identifier.

4. The method of claim 3, wherein the key identifier is further used for indicating that the target application server deletes an expiry time of the application key corresponding to the key identifier.

5. The method of claim 3, wherein sending the application key deletion request message to the target application server comprises:
sending the application key deletion request message to the target application server in response to the target application server being located within an operator network; and
sending the application key deletion request message to the target application server through a Network Exposure Function (NEF) in response to the target application server being located outside the operator network.

6. The method of claim 1, before receiving the AKMA context deletion request, the method further comprising:
receiving an application key acquisition message of an application server that initiates a service establishment request, wherein the application key acquisition message carries a key identifier and an application server identifier of the application server; and
storing the application server identifier.

7. The method of claim 6, wherein receiving the application key acquisition message of the application server that initiates the service establishment request comprises:
receiving an application key acquisition request of the application server in response to the application server being located within an operator network; and
receiving the application key acquisition request of the application server through an NEF in response to the application server being located outside the operator network.

8. The method of any one of claims 1 to 7, wherein the application server identifier comprises a fully qualified domain name (FQDN) of the application server; or
the application server identifier comprises a protocol identifier and an FQDN of the application server, wherein the protocol identifier is used for identifying a security protocol between the application server and a user equipment.

9. An application key deletion method, applied to an application server and comprising:
receiving an application key deletion request message, wherein the application key deletion request message carries a key identifier; and
deleting an application key corresponding to the key identifier according to the application key deletion request message.

10. The method of claim 9, further comprising:
deleting an expiry time of the application key corresponding to the key identifier.

11. The method of claim 9, wherein the application key deletion request message is sent by a key anchor node in response to finding an application server identifier corresponding to an Authentication and Key Management for Applications (AKMA) context, wherein the AKMA context corresponds to a user identifier in an AKMA context deletion request.

12. The method of claim 9, wherein receiving the application key deletion request message comprises:
receiving the application key deletion request message in response to the application server being located within an operator network; and
receiving the application key deletion request message through a Network Exposure Function (NEF) in response to the application server being located outside the operator network.

13. The method of claim 9, before receiving the application key deletion request message, the method further comprising:
sending an application key acquisition message to a key anchor node, wherein the application key acquisition message carries the key identifier and an application server identifier of the application server.

14. The method of claim 13, wherein sending the application key acquisition message to the key anchor node comprises:
sending the application key acquisition message to the key anchor node in response to the application server being located within an operator network; and
sending the application key acquisition message to the key anchor node through an NEF in response to the application server being located outside the operator network.

15. The method of any one of claims 9 to 14, wherein the application server identifier comprises a fully qualified domain name (FQDN) of the application server; or
the application server identifier comprises a protocol identifier and an FQDN of the application server, wherein the protocol identifier is used for identifying a security protocol between the application server and a user equipment.

16. A key anchor node, comprising a memory and at least one processor, wherein
the memory is configured to store at least one program; and
the at least one program, when executed by the at least one processor, causes the at least one processor to perform the application key deletion method of any one of claims 1 to 8.

17. An application server, comprising a memory and at least one processor, wherein
the memory is configured to store at least one program; and
the at least one program, when executed by the at least one processor, causes the at least one processor to perform the application key deletion method of any one of claims 9 to 15.

18. An application key deletion system, comprising the key anchor node of claim 16 and the application server of claim 17.

19. A computer-readable storage medium storing a computer program, wherein the computer program, when executed by a processor, causes the processor to perform the application key deletion method of any one of claims 1 to 15.
